# EUROPEAN PATENT SPECIFICATION

(11) **EP 1 845 142 B1**
(45) Date of publication and mention of the grant of the patent: **26.05.2010**
(21) Application number: 07251353.4
(22) Date of filing: 26.03.2007
(51) Int. Cl.: C09D 133/04

(54) **Dirt pickup resistant coating binder having high adhesion to substrates**
Schmutzfreie Lackbindemittel mit hoher Haftung über Substraten
Liant pour revêtement résistant à la salissure à haute adhérence sur des substrats

(30) Priority: 11.04.2006 US 791520 P
(43) Date of publication of application: 17.10.2007
(73) Proprietor: Rohm and Haas Company, Philadelphia, PA 19106-2399 (US)
(72) Inventor: Brady, Jean M., Maple Glen Pennsylvania 19002 (US); Rohrbach, William D., Perkasie Pennsylvania 18944 (US); Zhang, Wei, Maple Glen Pennsylvania 19002 (US)
(74) Representative: Buckley, Guy Julian

(56) References cited:
- EP-A1- 1 203 796
- US-A- 5 567 761

## Description

This invention relates to a composition of a waterborne coatings binder comprising the polymerization product of one or more monoethylenically unsaturated monomer and one or more beta-dicarbonyl or cyanocarbonyl monomer, wherein the beta-dicarbonyl monomer or cyanocarbonyl monomer is introduced into the latex polymer by addition of the said monomer during the second half of total monomer feed. The invention also relates to the method of forming the said composition of a waterborne coatings binder. The coatings binder produces coatings that are highly adherent to substrates and suitable for use in dirt pickup resistant coatings.

It is advantageous for exterior coatings to adhere to a variety of substrates especially weathered chalky substrates and smooth alkyd substrates. It is also advantageous for these adherent coatings to be resistant to dirt pickup over the lifetime of the coating. Previously, latex polymers having an acetoacetyl functional pendant moiety have been used to achieve high adhesion with dirt pickup resistance. Unfortunately, vinyl polymers containing pendant acetoacetate are prone to hydrolysis in water, particularly on heat aging, and at nearly any pH, yielding acetoacetic acid, which in turn decomposes to acetone and carbon dioxide. In known coating formulations, this problem has been mitigated by formation of the enamine, where the pH of coating formulations was brought up to about 9 using ammonia or primary amine to convert the acetoacetyl groups to enamine. However, it has been found that compositions made from latex polymers containing acetoacetyl functionality in the range of 5-10%, by weight based on the weight of the polymer, and in the enamine form can lead to bulging storage containers over time, due to the off-gassing of the hydrolysis byproducts.

In addition to the off-gassing problems, the acetoacetyl-functional monomer adds significant cost to a binder material, especially at the proportions used. Thus, there remains a need for coatings binders retaining the performance benefits provided through use of the acetoacetyl functionality while using less of the monomer to minimize cost and off-gassing.

Previously known coating formulations for light-assisted curing of coatings comprise vinyl polymers having acetoacetyl functional groups that are converted to the enamine form by treatment with ammonia or a primary amine at a pH of about 9. Such coatings are exposed to light to accelerate the rate of cure, which may be further accelerated by addition of a photoinitiator. Coatings made with latexes made with 5% and 10 weight %, based on the weight of the polymer, of 2-acetoacetoxyethyl methacrylate (AAEM) show improved cure with higher levels of enamine, as is demonstrated by displaying a lower swell ratio. Further, photoinitiators have been shown to provide a faster rate of cure than films without photoinitiator.

U.S. Patent No. 5,922,334 discloses an aqueous nail coating composition comprising a multi-phase polymer. The examples disclose the use of 8-12% by weight, based on total weight of monomers, of AAEM, which is present in the shell stage of the polymer. The method uses a cross-linked core with a Tg of at least 30° C and containing at least 2% by weight, based on total weight of monomers, of a hydrophobic monomer. Example 10 discloses a core:shell ratio of 75:25, resulting in an overall AAEM level of 4%. The polymer of Example 10 was not effective in forming a film (see Table 6). The results of Table 6 show that a core:shell ratio of at least 70:30 is required in this system to be effective to form a film.

The problem we faced was to provide a coating highly adherent to weathered surfaces and having excellent dirt resistance properties while using a low level of acetoacetate-functional monomer.

The present invention provides compositions that provide dirt resistant coatings having high adhesion to weathered and alkyd substrates, and also provides methods for making a polymer to provide such a composition, the method comprising introducing the beta-dicarbonyl, e.g. acetoacetyl, or cyanocarbonyl functionality into the polymerization medium *via* a staged feed process.

The present invention provides aqueous compositions comprising an aqueous dispersion of one or more copolymer, in polymerized form, of: (i) 95-98% by weight of one or more monoethylenically unsaturated monomer; and (ii) 2-5% by weight of a beta-dicarbonyl monomer or cyanocarbonyl monomer. The compositions further comprises one or more photoinitiator, in the range of 0.1-1% by weight, based upon the total weight of copolymer. The copolymer is formed by processes whereby at least 75%, by weight, of the beta-dicarbonyl monomer or cyanocarbonyl monomer (ii) is added by staged feed of the monomer during the second half, by weight, of the feed of monomers (i). Preferably, the beta-dicarbonyl monomer or cyanocarbonyl monomer (ii) is chosen from acetoacetoxy- functional monomers, acetoacetamido- functional monomers, cyanoacetoxy- functional monomers, and cyanoacetamido- functional monomers. A particularly preferred monomer (ii) is acetoacetoxyethyl methacrylate (AAEM).The beta-dicarbonyl monomer or cyanocarbonyl monomer may be in the enamine form. Further, the present invention provides methods of producing a coating comprising such compositions.

In a preferred embodiment, the copolymer of the present invention is formed by processes whereby all of the beta-dicarbonyl monomer or cyanocarbonyl monomer (ii) is added by staged feed of the monomer during the second half, by weight, of the feed of monomers (i).

In another preferred embodiment, the copolymer of the present invention is formed by a process whereby all of the beta-dicarbonyl monomer or cyanocarbonyl monomer (ii) is added by staged feed of the monomer during the last 25%, by weight, of the feed of monomers (i).

In yet another preferred embodiment, the present invention provides aqueous compositions wherein the copolymer binder of the present invention has a weight average molecular weight in the range of from 10,000 to 200,000.

Preferably, the invention provides compositions wherein the copolymer has a bimodal particle size distribution wherein the copolymer comprises a small particle size mode having particles with a median diameter of from 50 to 150 nm; and a larger particle size mode having particles with a median diameter between 150 and 400 nm, and the ratio of small mode particles to larger mode particles is in the range 10:90 to 90: 10 by weight.

The invention thus provides binders retaining the performance benefits provided through use of the beta-dicarbonyl- functionality, such as, for example, acetoacetyl-functionality, or the cyanocarbonyl- functionality while operating at a significantly lower use rate of functional monomer in order to minimize cost and off-gassing.

As used herein, the terms "(meth)acrylic" and "(meth)acrylate" herein referto acrylic or methacrylic, and acrylate or methacrylate, respectively.

As used herein, the term "staged feed", means that the beta-dicarbonyl- or cyanocarbonyl- functional monomer is added in stages.

The "glass transition temperature" or "Tg" of the copolymer is the temperature at or above which a glassy polymer will undergo segmental motion of the polymer chain. It is measured by differential scanning calorimetry (DSC). To measure the glass transition temperature of a polymer by DSC, the polymer sample is dried, preheated to 120°C, rapidly cooled to -100°C, and then heated to 150°C, at a rate of 20°C/minute while DSC data are collected. The glass transition temperature for the sample is measured at the midpoint of the inflection using the half-height method.

Copolymer molecular weights reported herein are weight average molecular weights as measured by gel permeation chromatography (GPC) using polystyrene standards as is known in the art.

Herein, the terms "particle size" and "particle diameter" and "median particle diameter" mean the weight average particle diameter determined as follows: Unless otherwise indicated, the weight average particle diameter is measured by a quasi-elastic light scattering technique, using an instrument such as a Brookhaven Model BI-90 Particle Sizer, supplied by Brookhaven Instruments Corporation, Holtsville, N.Y. For colloids with multi-modal particle size distributions, unless otherwise indicated, a particle size analysis method known as capillary hydrodynamic fractionation (CHDF) may be used with an instrument such as the Matec CHDF 2000 (from Matec Applied Sciences, Northborough, Ma) to obtain weight average particle sizes of the major particle modes.

As used herein, the term "beta-dicarbonyl monomer" " includes ethylenically unsaturated acetoacetoxy- functional monomers and ethylenically unsaturated acetoacetamido- functional monomers, and the term "cyanocarbonyl monomer" includes ethylenically unsaturated cyanoacetoxy- functional monomers, and ethylenically unsaturated cyanoacetamido- functional monomers.

These crosslinking monomers contain at least one crosslinking group selected from acetoacetoxy-, acetoacetamido-, cyanoacetoxy-, and cyanoacetamido- groups. Monomers containing acetoacetoxy groups include acetoacetoxy functional monomers having the structure: 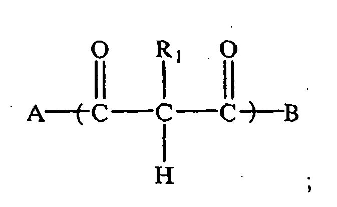 crosslinking monomers containing acetoacetamido groups include acetoacetamido functional monomers having the structure:

A-NH-C(O)-CH(R₁)-C(O)-B ;

crosslinking monomers containing cyanoacetoxy groups include cyanoacetoxy functional monomers having the structure: 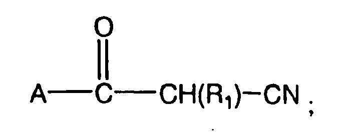 and crosslinking monomers containing cyanoacetamido groups include cyanoacetamido functional monomers having the structure:

A-NH-C(O)-CH(R₁)-CN

wherein
R₁ is either H, alkyl having 1 to 10 carbon atoms, or phenyl;
A is either: 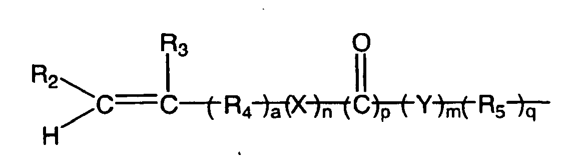 or 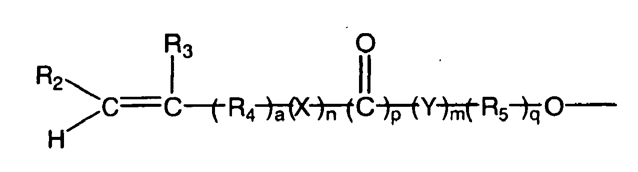 wherein
R₂ is either H, alkyl having 1 to 10 carbon atoms or phenyl, substituted phenyl, halo, CO₂CH₃, or CN;
R₃ is either H, alkyl having 1 to 10 carbon atoms or phenyl, substituted phenyl, or halo;
R₄ is either alkylene or substituted alkylene having 1 to 10 carbon atoms or phenylene, or substituted phenylene;
R₅ is either alkylene or substituted alkylene having 1 to 10 carbon atoms;
a, m, n, p, and q are independently either 0 or 1,
X and Y are independently either -NH- or -O-;
B is either A, alkyl having 1 to 10 carbon atoms or phenyl, substituted phenyl, or heterocyclic.

Suitable acetoacetoxy functional monomers may include, for example, acetoacetoxyethyl (meth)acrylate, acetoacetoxypropyl (meth)acrylate, allyl acetoacetate, acetoacetoxybutyl (meth)acrylate, 2,3-di(acetoacetoxy)propyl (meth)acrylate, and vinyl acetoacetate. In general, any polymerizable hydroxy-functional monomer can be converted to the corresponding acetoacetate by reaction with a diketene or other suitable acetoacetylating agent.

Suitable acetoacetamido- functional monomers may include, for example, acetoacetamidoethyl (meth)acrylate, acetoacetamidopropyl (meth)acrylate, acetoacetamidobutyl (meth)acrylate, 2,3-di(acetoacetamido)propyl (meth)acrylate, allyl acetoacetamide, and vinyl acetoacetamide; likewise cyanoacetoxy- functional monomers are also suitable, such as, for example, cyanoacetoxyethyl (meth)acrylate, cyanoacetoxypropyl (meth)acrylate, cyanoacetoxybutyl (meth) acrylate, 2,3-di(cyanoacetoxy)propyl (meth)acrylate, allyl cyanoacetate, and vinyl cyanoacetate; as well as cyanoacetamido- functional monomers, such as, for example, cyanoacetamidoethyl (meth)acrylate, cyanoacetamidopropyl (meth) acrylate, cyanoacetamidobutyl (meth)acrylate, 2,3-di(cyanoacetamido)propyl (meth)acrylate, allyl cyanoacetamide, and vinyl cyanoacetamide.

The copolymer may be polymerized from a mixture containing one or more such monomers, which are collectively referred to herein as beta-dicarbonyl and cyanocarbonyl monomers.

Preferably, the beta-dicarbonyl monomer or cyanocarbonyl monomer is used in amounts from 2-5%, more preferably 3-5%, and most preferably 3-4%, by weight, based upon the overall weight of the polymeric binder, with acetoacetoxyethyl methacrylate, AAEM, being the preferred beta-dicarbonyl or cyanocarbonyl monomer.

The binder also contains from about 95% to about 98% by weight, based upon the weight of the polymeric binder, of at least one copolymerized ethylenically unsaturated monomer. For example, acrylic ester monomers may be used. Thus, suitable ethylenically unsaturated monomers may include, for example, (meth)acrylic esters including C₁ to C₄₀ esters of (meth)acrylic acid such as methyl (meth)acrylate, ethyl (meth)acrylate, butyl (meth)acrylate, 2-ethylhexyl (meth)acrylate, decyl (meth)acrylate, lauryl (meth)acrylate, stearyl (meth)acrylate, isobornyl (meth)acrylate; hydroxyalkyl esters of (meth)acrylic acid such as hydroxyethyl (meth)acrylate and hydroxypropyl (meth)acrylate; (meth)acrylamide, propenamide, and dimethylacrylamide; (meth)acrylonitrile; amino-functional and ureido-functional monomers; α-olefins such as 1-decene; styrene or substituted styrenes; vinyl acetate, vinyl butyrate and other vinyl esters; vinyl monomers such as vinyl chloride, vinyl toluene, and vinyl benzophenone; vinylidene chloride; N-vinyl pyrrolidone; ethylene, propylene, and butadiene. Preferred are all-acrylic, predominantly acrylic, styrene/acrylic, and vinyl acetate/acrylic copolymers.

The copolymer of the present invention may further comprise polymerized units of ethylenically unsaturated acid-functional or anionic monomer in the amount of from 0.1-7.0% by weight, based on the weight of the polymeric binder, more preferably 0.5-3.0%, and most preferably 0.8-2.0% by weight. "Acid-functional or anionic monomer" refers to ethylenically unsaturated monomers containing acid groups or their salts. Suitable acid groups include, for example, monomers containing carboxylic acid groups or their respective anions. Examples of unsaturated carboxylic acid monomers (or their respective anions) include acrylic acid, methacrylic acid, crotonic acid, itaconic acid, fumaric acid, maleic acid, and mono-ester derivatives of diacids, such as monomethyl itaconate, monomethyl fumarate, and monobutyl fumarate. Also included is maleic anhydride, which is able to function similarly.

A photoinitiator is used in this invention at levels in the range of 0.1-1.0%, more preferably 0.2-0.8%, and most preferably 0.4-0.7%, by weight based on the total weight of copolymer, such as, for example, a substituted acetophenone or benzophenone derivative as is taught in U.S. Patent No. 5,162,415. The photoinitiator can be added at any time during the polymerization, or *via* an inert solvent, or as a post-add.

The polymeric binder used in this invention is a substantially thermoplastic, or substantially uncrosslinked, polymer when it is applied to the substrate, although low levels of adventitious crosslinking may also be present. Further crosslinking may take place after film formation has started to occur.

The Tg of the copolymer is from about -35°C to about +35°C, preferably 0 to +25°C, more preferably +10 to +20°C, and most preferably +10 to +15°C.

The practice of emulsion polymerization is discussed in detail in D.C. Blackley, Emulsion Polymerization (Wiley, 1975). Conventional emulsion polymerization techniques may be used to prepare the polymer composition of this invention as an aqueous dispersion of polymer particles. The practice of emulsion polymerization is also discussed in H. Warson, The Applications of Synthetic Resin Emulsions, Chapter 2 (Ernest Benn Ltd., London 1972).

The ethylenically unsaturated monomers may be emulsified as known in the art with a stabilizing reagent such as an anionic or nonionic dispersing agent, also referred to as a surfactant. Combinations of anionic and nonionic dispersing agents may also be used. The amount of surfactant used is usually 0.1% to 6% by weight, based upon the weight of total monomer. High molecular weight polymers such as hydroxy ethyl cellulose, methyl cellulose, and vinyl alcohol may be used as emulsion stabilizers and protective colloids, as may polyelectrolytes such as polyacrylic acid. Acidic monomers particularly those of low molecular weight, such as acrylic acid and methacrylic acid, are water soluble, and thus may serve as dispersing agents which aid in emulsifying the other monomers used.

Suitable anionic dispersing agents may include, for example, the higher fatty alcohol sulfates, such as sodium lauryl sulfate; or alkylaryl sulfonates such as sodium or potassium isopropylbenzene sulfonates or isopropyl naphthalene sulfonates.

Suitable nonionic dispersing agents may include, for example, alkylphenoxypolyethoxyethanols having alkyl groups of from about 7 to 18 carbon atoms and from about 6 to about 60 oxyethylene units, such as heptylphenoxypolyethoxyethanols, methyloctyl phenoxypolyethoxyethanols; or polyethoxyethanol derivatives of methylene-linked alkyl phenols.

In an embodiment of the invention, the polymer comprises, as a polymerized unit, a copolymerizable surfactant having at least one polymerizable ethylenically unsaturated bond, such as those described in U.S. Patent Application Serial No. 11/255,635. Other monomers that can be copolymerized with the polymer, such as the polyalkylene oxide-derivatized (meth)acrylate type monomers described in U.S. Patent Publication 2001/0031826 (paragraphs 0001-0002), can also be used. Such materials, and those that function similarly, can perform the role of stabilizing reagents.

Polymerization may be initiated by the thermal dissociation of an initiator species or a redox system may be used. Conventional (thermal) free radical initiators may be used such as, for example, azo compounds, peroxy compounds such as, for example, t-butyl hydroperoxide or cumene hydroperoxide, and peracids and their salts, e.g. ammonium and/or alkali metal persulfates, at a level of 0.01% to 3.0% by weight, based on the weight of total monomer. Alternatively, redox systems using the same initiators (alternatively referred to as "oxidants") coupled with a suitable reductant such as, for example, sodium sulfoxylate formaldehyde or isoascorbic acid may be used. Redox reactions catalyzing metal salts of iron, copper, manganese, silver, platinum, vanadium, nickel, chromium, palladium, or cobalt may be used. In redox initiated systems, the reducing component is frequently referred to as an accelerator. The initiator and accelerator, commonly referred to as catalyst, catalyst system, or redox system, may be used in proportion from about 0.01 % or less to 3% each, based on the weight of monomers to be copolymerized. Examples of redox catalyst systems include t-butyl hydroperoxide/sodium formaldehyde sulfoxylate/Fe(II) and ammonium persulfate/sodium bisulfite/sodium hydrosulfite/Fe(II). The polymerization temperature may be from 10°C to 90°C, or more, and may be optimized for the catalyst system employed, as is conventional. Emulsion polymerization may be seeded or unseeded.

Chain transfer agents such as mercaptans, polymercaptan, polyhalogen, and allyl compounds in the polymerization mixture may be used to moderate the molecular weight of the polymer. Examples of chain transfer agents which may be used include long chain C₄-C₂₂ linear or branched alkyl mercaptans such as t-dodecyl mercaptans, alcohols such as isopropanol, and polyhalogen compounds such as carbon tetrachloride. Generally from 0.1 to 3 weight %, based on the total weight of monomers, may be used. Alternatively, suitable molecular weights may be obtained by increasing the initiator level, or by a combination of increased initiator level and a chain transfer agent.

For polymerization, a monomer emulsion containing all or part of the monomers to be polymerized may be prepared using the monomers, water, and surfactants. A catalyst solution containing catalyst in water may be separately prepared. The monomer emulsion and catalyst solution may be cofed into the polymerization vessel over the course of the emulsion polymerization. The reaction vessel itself may initially contain water. The reaction vessel may also additionally contain seed emulsion and further may additionally contain an initial charge of the polymerization catalyst. The temperature of the reaction vessel during the emulsion polymerization may be controlled by cooling to remove heat generated by the polymerization reaction or by heating the reaction vessel. Several monomer emulsions may be simultaneously cofed into the reaction vessel. When multiple monomer emulsions are cofed, they may be of different monomer compositions. The sequence and rates at which the different monomer emulsions are cofed may be altered during the emulsion polymerization process. The pH of the contents of the reaction vessel may also be altered during the course of the emulsion polymerization process.

In one embodiment of the present invention, the emulsion polymer may be prepared by a multistage emulsion polymerization process, in which at least two stages differing in composition are polymerized in sequential fashion. Such a process may result in the formation of at least two mutually incompatible polymer compositions, thereby resulting in the formation of at least two phases within the polymer particles. Such particles are composed of two or more phases of various geometries or morphologies such as, for example, core/shell or core/sheath particles, core/shell particles with shell phases incompletely encapsulating the core, core/shell particles with a multiplicity of cores, and interpenetrating network particles. In all of these cases, the majority of the surface area of the particle will be occupied by at least one outer phase and the interior of the particle will be occupied by at least one inner phase. Each of the stages of the multi-staged emulsion polymer may contain the same monomers, surfactants, chain transfer agents, etc. as disclosed hereinabove for the emulsion polymer. Thus, in one embodiment, the invention provides a multi-stage emulsion polymerization process in which the first polymer is a first stage polymer and the second polymer is a second stage polymer, i.e., the second polymer is formed by emulsion polymerization in the presence of the first polymer. In any event, the weight of the second stage polymer is from 25% to 50% of the total weight of the first stage polymer and the second stage polymer, based upon dry polymer weights. For a multi-staged polymer particle, the amount of beta-dicarbonyl monomer or cyanocarbonyl monomer, or other monomers / components, shall be determined from the overall composition of the emulsion polymer without regard for the number of stages or phases therein. The polymerization techniques used to prepare such multistage emulsion polymers are well known in the art such as, for example, US Patents No. 4,325,856; 4,654,397; and 4,814,373. A preferred multistage emulsion polymer contains beta-dicarbonyl monomer orcyanocarbonyl monomer in only one of the stages.

In a preferred embodiment, some or all of the acid-functional monomer is also added, along with the beta-dicarbonyl monomer or cyanocarbonyl monomer, by staged feed of the monomer during the second half of the feed of monomers. It has been found that this can aid the stability of the process in some cases.

In another preferred embodiment, the polymerization of the copolymer particles is accomplished using a gradual addition feed process. In this process, a seed polymer is added or formed in situ, and then grown out through the gradual addition of monomer(s). In the case where the seed is formed in situ, a small charge of monomer emulsion to the reactor, typically 3% of the whole monomer emulsion mix, is made and the polymerization is initiated to form a seed. In other cases a fully polymerized particle of a composition compatible with the monomers to be charged is added to the reactor.

The latex polymer suitable for the present invention may have a weight average molecular weight in the range of 10,000 to 200,000, preferably 25,000 to 120,000, and, most preferably, 40,000 to 90,000. If the molecular weight of the latex polymer exceeds 200,000, the adhesion of the resultant coating to chalky substrate is weakened. Furthermore, if the molecular weight drops below 25,000, the water sensitivity increases, which thereby weakens the adhesion of the resultant coating to weathered substrates and in addition the gloss retention of the resultant coating on weathered substrates would decrease.

In the case of a multistage polymerization, at least one of the polymers is provided in this weight average molecular weight range. The latex polymer having the weight average molecular weight in the desired range is achieved by utilizing 0.1% to 2%, preferably 0.25% to 1.5%, and most preferably 0.4% to 1.0% of the chain transfer agent, for example 1-dodecanethiol, based upon the total latex polymer weight.

The polymer particles of the aqueous dispersion may have a particle size of from 20 to 500 nm, preferably 20 to 250 nm, most preferably 50 to 150 nm. The particle size distribution may be unimodal, bimodal, multimodal, or broad.

In one preferred embodiment, the invention uses a bimodal composition to maximize the solids level of the binder, while maintaining a high content of small particle size mode appropriate for tannin blocking performance. In this embodiment, the small particle size mode particles have a diameter from 50 to 150 nm and the large particle size mode particles have a median diameter between 150 and 400 nm. In this embodiment, the ratio of small particle size mode particles to large particle size mode particles is from 10:90 to 90: 10 by weight.

The aqueous polymer dispersion of this invention can be used to make a coating composition that also comprises titanium dioxide as a pigment component and /or it may comprise fillers. Examples of fillers and pigments include, e.g., titanium dioxide, zinc oxide, clay, iron oxide, magnesium silicate, calcium carbonate and combinations thereof. Preferably, the total amount of titanium dioxide and fillers, combined, as a percentage of total acrylic polymer solids is from 1% to 400%, more preferably from 50% to 200%. Preferably, the amount of titanium dioxide as a percentage of total acrylic polymer solids is from 1% to 200%, more preferably from 50% to 150%.

Other components may be added to the polymer composition of this invention, including without limitation, other polymers such as vinyl acetate polymers, styrene butadiene polymers, acrylic copolymers, and vinyl chloride copolymers; other pigments or fillers; surfactants; plasticizers; buffers; neutralizers; humectants; waxes; dyes; pearles-cents; adhesion promoters; tackifiers; dispersants; defoamers; leveling agents; optical brighteners; ultraviolet stabilizers such as hindered amine light stabilizers; cosolvents; coalescents; rheology modifiers or thickeners; preservatives; biocides; and antioxidants.

The coating composition of this invention may be applied onto substrates using conventional coating application methods, such as, for example, brushing, rolling, dipping, and spraying methods. Substrates to which the coating composition of this invention may be applied include, for example, lignocellulosics, such as wood and plywood, including but not limited to cedar, pine, teak, oak, maple, and walnut; processed wood including but not limited to medium density fiber board, chip board, laminates; mineral substrates including but not limited to masonry, concrete, stucco, fiber, mortar, cement, cement asbestos, plaster, plasterboard, glazed and unglazed ceramic; metal including but not limited to galvanized iron, galvanized steel, cold rolled steel, Zincalume™ metal (BHP Steel Pty. Ltd., Sydney, Australia), Zincalume™ II metal, aluminum, wrought iron, drop forged steel, and stainless steel; previously painted or primed surfaces (fresh, aged or weathered) including but not limited to acrylic coatings, vinyl acrylic coatings, styrene acrylic coatings, powder coated surfaces, solvent acrylic coatings, alkyd resin coatings, solvent urethane coatings, and epoxy coatings; synthetic substrates including but not limited to polyvinyl chloride, polyvinylidene chloride, polyethylene, and polypropylene; asphalt; cellulosic substrates such as paper, paperboard, wallpaper, and wallboard; glass; leather; and woven and nonwoven material such as cloth, wool, synthetic and natural fiber, and textiles. The coating composition may be used, for example, as a wood coating, maintenance coating, interior or exterior wall coating, metal primer or coating, traffic paint, leather coating, coil coating, architectural coating, mastic sealant, caulk, board coating, paper coating, ink, flooring coating, and adhesive. Coatings prepared from the polymer composition may be flat coatings, satin coatings, semi-gloss coatings, gloss coatings, primers, textured coatings, and the like.

After the coating composition has been applied to a substrate, the coating composition is dried or is allowed to dry to form a film. Heat may be applied to dry the coating composition.

### EXAMPLES

### Preparation of Weathered Substrates

Chalky Acrylic (latex based) substrate preparation: An exterior latex paint was made with 11.3 kilograms of anatase grade titanium dioxide per 386 liters of paint and applied to cedar panels. The panels were dried for one week and then exposed outdoors, facing south, at an angle of 45 degrees until they developed a chalk rating of ASTM 5 or 6 as defined by American Society of Testing Materials, Philadelphia, Pa. in ASTM No. D4214-98 (Standard Test Methods for Evaluating the Degree of Chalking of Exterior Paint Films, August 10, 1998).

### Preparation of Aged Substrates

Gloss Alkyd paint was applied to a cedar panel and then aged for a duration of either 8 weeks (using Duron^{™} Gloss Alkyd Paint, from Duron, Inc., Beltsville, Md, USA), or alternatively 10 months (using Dulux^{™} Super Enamel Paint, from Orica Ltd., Melbourne, Victoria, Australia).

### TEST PROCEDURES

The following test procedures were used to generate the data reported in the Examples below:

### Wet Adhesion by Cross-Hatch, % Retained

Divide the substrate into strips 2-3 inches wide. At 25 +/- 3°C and 50 +/- 5% relative humidity, apply by brush 2 coats of the test paints with 4-5 hour drying time between coats. Dry the paints overnight at 25 +/- 3°C and 50 +/- 5% relative humidity, and then place the panel in the fog box (i.e. a water mist cabinet) for 4-5 hours or more before testing. Remove the panel from the fog box and cover the wet panel immediately with wet cheesecloth (to maintain dampness). Remove the cheesecloth from the individual test area, pat dry with tissue, and then test for tape adhesion as follows (Grid Tape Adhesion):

Use a metal comb-like template containing 10 teeth (1/16" wide x 1-1/2" long) and 11 slits (1/32" wide between teeth), or alternatively, a Gardner^{™} (BYK-Gardner, Columbia, Md, USA) Adhesion Knife that produces a 100 square grid in two passes. Place the comb-like metal template on the surface of the test paint and run a Stanley^{™} (Stanley Logistics, Inc., New Britain, Ct, USA) Utility Knife or Excel^{™} (Warrensville File & Knife, Inc., Norcross, Ga, USA) Adhesion Knife through each slit, thus inscribing 11 parallel cuts in the paint film. The template is then rotated 90° and placed over the same area, and a second set of 11 cuts is made. The horizontal and vertical cuts form a 100 square test area (the Gardner Adhesion Knife produces similar test areas). One inch wide Permacel^{™} (Permacel Corp., New Brunswick, NJ, USA) tape with a 4" overlap at one end to form a pull tab is applied over the test area. The tape is rubbed with an eraser to assure good contact over the test area, and then using the overlap for grip, the tape is pulled quickly at a 180° angle from the substrate. Then, immediately determine the knife peel adhesion, i.e. the number of paint squares remaining, and record the number as the percent of paint squares retained - the higher percentage retained indicates better wet adhesion. (These tests should be performed as quickly as possible, because adhesion improves with drying and, therefore, exposure in air).

### Wet Adhesion by Force to Peel

1. Using a 1 inch brush, apply 2.5 grams of test paint to a 1-1/2 inch x 6 inch area of the substrate; immediately place a 1-1/2 inch x 9 inch strip of dry cheesecloth on the wet paint leaving 1-1/2 inch hanging over each edge; firmly press the cheesecloth into the wet paint, and saturate it by brushing on an additional 7.5 grams of test paint.
2. The panels are then conditioned 1 week at 25 +/- 3°C and 50 +/- 5% relative humidity.
3. Using the utility knife and the template, scribe a 1 inch wide strip through to the substrate the length of the cheesecloth on the test panel.
4. Using scissors, cut all the cloth fibers out to the edge of the cheesecloth along the thin edge (top) of the board.
5. Place the test panel in the fog box for 30 minutes. The test time can be varied depending on the severity required. If a longer soaking time is used, the length of time must be recorded.
6. Remove the panel from the fog box and attach horizontally to a ring stand slanting forward at approximately 10 degrees from the perpendicular using utility/burette clamps. The thin edge of the panel must be in the up direction.
7. Attach the weight hanger to the cheesecloth using an S hook or paper clip; increasing the weight on the weight holder until the cheesecloth peels away from the substrate at a rate of 10-20 mm/minute. The panel may be marked with a scale, or a ruler may be used as a guide in determining rate of separation. The amount of weight in grams required to attain the separation, up to 1500 grams, is reported, beyond which 1500 grams is reported. 8. The untested areas must be kept wet by draping a piece of cheesecloth saturated with water over the test panel and occasionally applying water from a water bottle to keep the panel damp.

### Tannin Stain Blocking Evaluation

Choose planed and sanded cedar and redwood panels (36" x 5-3/4") with a consistent stain pattern across the length of the board. Boards with areas of rough spots or uneven sanding should be avoided, as they will bleed through more readily. Divide the panel into equal test sites (at least 2" wide). Using a 1" brush, apply sufficient weight of the test paints to achieve 450 sq ft/gal (e.g., 0.8 gram of a 10.7 lb/gal coating) to a 2" x 5-3/4" area of substrate. Allow the paints to dry for two hours. Repeat this step to achieve two coats. Add hot tap water to the bottom of the fog box ~1 hour before the boards go in. This will generate an elevated temperature, high humidity atmosphere. Place the boards into a high humidity fog box (no spray) for 14 to 16 hours (overnight), laying them with painted side up. Carefully remove the panel (s) the next morning to prevent water drops from striking the panel(s). Immediately place the panels on racks at 25 +/-3°C and 50 +/- 5% relative humidity and allow them to dry for at least one day. Quantitatively rate each paint on a scale of 1-10 for tannin stain blocking, with 10 being best (cleanest) and 1 worst (showing stain bleed-through).

### Dirt Pick-Up Resistance by Laboratory Test .

1. Draw down a film of each test paint onto "Q" aluminum panels using a 3 mil Bird film applicator^{™} (MCD Industries, Medford, Ma, USA).
2. Allow the samples to dry for one week at 25 +/- 3°C and 50 +/- 5% relative humidity.
3. Place the 3" x 9" panel with its test area facing inward in a Weather-O-meter^{®}, Atlas Electric Devices Company, Chicago, III. For 500 hours.
4. Remove panels from Weather-O-meter^{®} and measure Y reflectance, averaging three readings.
5. Place the panels in the fog box for 1-1/2 hours, then remove them.
6. Blot dry one panel at a time, and brush on a uniform coating of the following Mapico^{™} (Rockwood Pigments NA, Inc., Beltsville, Md, USA) 422 iron oxide slurry: dissolve two drops of Tamol^{®} 731 (Rohm and Haas Co., Philadelphia, Pa, USA) in 250 grams of water and add 125 grams of Mapico^{™} 422 iron oxide. Disperse with a Lightnin^{®} mixer (Lightnin, Rochester, NY, USA) until smooth.
7. Air dry the slurry coated panels for 3 hours.
8. Place the test panels in a 140°F oven for 1 hour. Remove the panels and allow them to come to room temperature (30 minutes).
9. Wash each panel under running tepid water, while rubbing lightly and evenly with a cheesecloth pad. Make sure that all excess iron oxide is removed, treating all panels as uniformly as possible.
10. Maintain an even rubbing pressure for each sample.
11. Use a new cheesecloth pad for each panel.
12. Air dry for a minimum of 4 hours, and take three reflectance readings over the stained area; average the readings. Higher Y reflectance numbers show greater whiteness and therefore have superior dirt pick-up resistance.

### Dirt Pick-Up Resistance by Exterior Exposure

Drawdown a film of each test paint onto "Q" aluminum panels using a 3 mil Bird film applicator. After drying of the paint film, the panels are placed horizontal (film side) up and exposed to the weather conditions prevalent to Spring House, Pa. The reflectance readings are recorded at time intervals, beginning at time, t = 0. Higher Y reflectance numbers show greater whiteness and therefore have superior dirt pick-up resistance.

### EXAMPLE 1

### Comparative Sample A: Acrylic latex without AAEM

A 5-liter, four necked round bottom flask was equipped with paddle stirrer, thermometer, nitrogen inlet, and condenser. A mixture of 134 grams of Surfactant A¹ and 1104 grams of deionized water was added to the flask and heated to 84°C under a nitrogen atmosphere. A monomer emulsion ("ME") was prepared by mixing 597 grams of deionized water, 934 grams of butyl acrylate, 801 grams of methyl methacrylate, 47 grams of acrylic acid, 18 grams of ureido methacrylate, and 24 grams of Surfactant A. A portion of this ME (194 grams) was added to the reactor, followed by a solution of 6 grams of ammonium carbonate in 24 grams of water. An initiator solution of 5.8 grams of ammonium persulfate in 34 grams of deionized water was then added. The remainder of the ME was gradually fed to the reactor over a period of <3hours while the reaction mixture was maintained at 87°C. After the feed was complete, the reaction mixture temperature was decreased to 75°C. After the addition of a mixture of 7 grams of a 0.15% iron sulfate solution and 2 grams of 1% ethylenediaminetetracetic acid, tetrasodium salt solution; two chase solutions (2 grams of 70% tert-butyl hydroperoxide in 25 grams of deionized water and 1.2 grams of isoascorbic acid in 25 grams of deionized water were added over 30 minutes. The reaction mixture was cooled to 55°C and 18 grams of aqueous ammonia (28%) was added. The dispersion was cooled to room temperature and filtered to remove any coagulum. The filtered dispersion had a pH of 7.5, and 46.4% of solids content, and an average particle size of 90 nm by use of a BI-90 particle sizer. ¹ Surfactant A is a 25% solution in water of a mixture of surfactants comprising sodium ethoxylated C₁₂-C₁₅ alkyl ether phosphates having 6-9 ethylene oxide monomer residues per molecule.

### EXAMPLE 2

### Comparative Sample B: Acrylic latex with 8% AAEM, not staged

A 5-liter, four necked round bottom flask was equipped with paddle stirrer, thermometer, nitrogen inlet, and condenser. A mixture of 88 grams of Surfactant A and 1200 grams of deionized water was added to the flask and heated to 84°C under a nitrogen atmosphere. A monomer emulsion (ME) was prepared by mixing 423 grams of deionized water, 867 grams of butyl acrylate, 655 grams of methyl methacrylate, 43 grams of acrylic acid, 136 grams of acetoacetoxyethyl methacrylate (AAEM), 13 grams of 1-dodecanethiol, and 61 grams of Surfactant A. A portion of this ME (160 grams) was added to the reactor, followed by a solution of 7 grams of ammonium bicarbonate in 38 grams of water. An initiator solution of 5.3 grams of ammonium persulfate in 38 grams of deionized water was then added. The remainder of the ME was gradually fed to the reactor over a period of 120 minutes while the reaction mixture was maintained at 85°C. After the feed was complete, the reaction mixture temperature was decreased to 75°C. After the addition of a mixture of 6 grams of a 0.15% iron sulfate solution and 9 grams of 1% ethylenediaminetetracetic acid, tetrasodium salt solution; two chase solutions (2 grams of 70% tert-butyl hydroperoxide in 25 grams of deionized water and 0.5 grams of isoascorbic acid in 25 grams of deionized water were added over 30 minutes. The reaction mixture was cooled to 55°C and 21 grams of aqueous ammonia (28%) was added. The dispersion was cooled to room temperature and filtered to remove any coagulum. The filtered dispersion had a pH of 9.0, and 46.2% of solids content, and an average particle size of 100 nm by use of a BI-90 particle sizer.

### EXAMPLES 3-5

### Comparative Samples C, D, E: Acrylic Latexes with 2-4% AAEM, not staged

The synthesis procedure described in Example 2 was followed, except the charges of monomer were modified according to Table 1 below:

**TABLE 1: Modifications to monomer charges**

| | BA charged | MMA charged | AAEM charged |
|---|---|---|---|
| Comparative C | 986 gms | 638 gms | 34 gms (2.0%) |
| Comparative D | 986 gms | 621 gms | 51 gms (3.0%) |
| Comparative E | 986 gms | 603 gms | 68 gms (4.0%) |

### REFERENCE EXAMPLES 6-9 OF POLYMERS FOR USE IN THE CLAIMED COMPOSITION

### Preparation of Acrylic Latexes with 2-4% AAEM staged feed

The synthesis procedure described in Example 2 was followed, except the AAEM was not added into the ME preparation from the start of the batch. Instead, the charge of AAEM was added to the ME at the point of 50% of ME feed completed, or at the point of 75% of feed completed as described in Table 2 below (and using the monomer amounts listed in the Table):

**TABLE 2: Addition of AAEM**

| | MMA Charged | AAEM Charged | AAEM Charged to ME at: |
|---|---|---|---|
| Example 6 | 638 grams | 34 grams | staged @ 50% of feed completed |
| Example 7 | 638 grams | 34 grams | staged @ 75% of feed completed |
| Example 8 | 603 grams | 68 grams | staged @ 50% of feed completed |
| Example 9 | 603 grams | 68 grams | staged @ 75% of feed completed |

### EXAMPLE 10

### Preparation of an Acrylic Latex with Staged Feed AAEM and Photoinitiator

A 5-liter, four necked flask was equipped with paddle stirrer, thermometer, nitrogen inlet, and condenser. A mixture of 54 grams of Surfactant A, 7 grams of ammonium bicarbonate, 78 grams of an acrylic polymer emulsion (seed polymer: 100 nm, 45% solids), and 629 grams of deionized water was added to the kettle and heated to 80°C under nitrogen atmosphere. An ME was prepared by mixing 501 grams of deionized water, 95 grams of Surfactant A, 918 grams of butyl acrylate, 695 grams of methyl methacrylate, 8 grams of 1-dodecanethiol, and 25 grams of methacrylic acid. With the kettle water at 80°C, the following materials were added in order: a mixture of 14 grams of 0.15% iron sulfate solution and 1.4 grams of 1% ethylenediaminetetraacetic acid tetrasodium salt solution, a solution of 0.50 grams of tert-butyl hydroperoxide in 10 grams of deionized water, and a solution of 0.25 grams of isoascorbic acid in 10 grams of water. The ME was fed gradually to the reactor while maintaining a reactor temperature of 80°C. Two cofeed solutions (4.6 grams of 70% tert-butyl hydroperoxide in 90 grams of deionized water and 3.2 grams of isoascorbic acid in 90 grams of deionized water) were gradually added along with the ME. At the point where 586 grams of ME remained to be fed (at 75% of feed), 51 grams of AAEM and 11 grams of methacrylic acid were added to the remaining ME. The total feed time of ME to the reactor was <3 hours minutes. After completion of the monomer addition, the ME container was rinsed with 30 grams of deionized water and the rinse was added to the reactor. The reaction was held for 20 minutes while allowing the temperature to decrease to 74°C. A solution of 0.8 grams of 70% tert-butylhydroperoxide in 7 grams of deionized water was co-fed with a solution of 0.4 grams of isoascorbic acid in 8 grams of deionized water and the reactor was held at 74°C for a period of 20 minutes. A solution of 0.7 grams of 70% tert-butylhydroperoxide in 7 grams of deionized water was co-fed with a solution of 0.4 grams of isoascorbic acid in 12 grams of deionized water and the reactor was held at 74°C for a period of 40 minutes. The dispersion was then cooled to 50°C and then 27 grams of ammonium hydroxide (28% solution) was added to reach a pH of 9.0. The dispersion was cooled to room temperature and filtered to remove any coagulum. The filtered dispersion had a pH of 9.0, and 54.0% of solids content, and particle sizes of 78nm (41%) and 231 nm (59%) as measured by a Matec Applied Sciences CHDF-2000 instrument. A solution of 12 grams of benzophenone dissolved in 18 grams of acetone was added slowly with stirring to the dispersion at room temperature.

### EXAMPLE 11

### Preparation of a Two Stage Acrylic Latex with AAEM in Second Stage

A 5-liter, four necked flask is equipped with paddle stirrer, thermometer, nitrogen inlet, and condenser. A mixture of 54 grams of Surfactant A, 7 grams of ammonium bicarbonate, 78 grams of an acrylic polymer emulsion (100 nm, 45% solids), and 629 grams of deionized water is added to the kettle and heated to 80°C under nitrogen atmosphere. An ME is prepared by mixing 376 grams of deionized water, 71 grams of Surfactant A, 688.5 grams of butyl acrylate, 521 grams of methyl methacrylate, 6 grams of 1-dodecanethiol, and 19 grams of methacrylic acid. With the kettle water at 80°C, the following materials are added in order: a mixture of 14 grams of 0.15% iron sulfate solution and 1.4 grams of 1% ethylenediamine tetraacetic acid tetrasodium salt solution, a solution of 0.50 grams of tert-butyl hydroperoxide in 10 grams of deionized water, and a solution of 0.25 grams of isoascorbic acid in 10 grams of water. The monomer emulsion is fed gradually to the reactor over a period of 90 minutes while maintaining a reactor temperature of 80°C. Two cofeed solutions (4.6 grams of 70% tert-butyl hydroperoxide in 90 grams of deionized water and 3.2 grams of isoascorbic acid in 90 grams of deionized water) are gradually added along with the ME over a period of 120 minutes. When the monomer emulsion addition is complete, a second monomer emulsion, prepared from 125 grams of deionized water, 24 grams of Surfactant A, 43.5 grams of 2-ethylhexyl acrylate, 360 grams of butyl methacrylate, 51 grams of acetoacetoxyethyl methacrylate and 17 grams of methacrylic acid, is added gradually over 30 minutes. After completion of the monomer addition, the ME container is rinsed with 30 grams of deionized water and the rinse was added to the reactor. The reaction is held for 20 minutes while allowing the temperature to decrease to 74°C. A solution of 0.8 grams of 70% tert-butylhydroperoxide in 7 grams of deionized water was co-fed with a solution of 0.4 grams of isoascorbic acid in 8 grams of deionized water and the reactor was held at 74°C for a period of 20 minutes. A solution of 0.7 grams of 70% tert-butylhydroperoxide in 7 grams of deionized water is co-fed with a solution of 0.4 grams of isoascorbic acid in 12 grams of deionized water and the reactor is held at 74°C for a period of 40 minutes. The dispersion is then cooled to 50°C and then 27 grams of ammonium hydroxide (28% solution) is added to reach a pH of 9.0. The dispersion is cooled to room temperature and filtered to remove any coagulum. The filtered dispersion has a pH of 9.0, and 54.0% of solids content, and particle sizes of 80 nm (40%) and 230 nm (60%) as measured by a Matec Applied Sciences CHDF-2000 instrument. A solution of 12 grams of benzophenone dissolved in 18 grams of acetone is added slowly with stirring to the dispersion at room temperature.

### EXAMPLE 12 : REFERENCE COMPOSITIONS NOT WITHIN THE SCOPE OF THE CLAIMS

### Formulation of Acrylic Latex Samples

Paints were prepared for adhesion, stain-blocking, and durability testing by the procedure described in U.S. Patent No. 5,534,310 Example 7. The characteristics of the three different paint formulations used are described in Table 3 below:

**TABLE 3: Formulation characteristics**

| Formulation | A | B | C |
|---|---|---|---|
| Pigment Volume Concentration | 45% | 31% | 41% |
| Extenders Used | Clay/Silica | Nephaline Syenite | Calcium Carbonate |
| Zinc Oxide Level | 2 PVC | 1 PVC | 1 PVC |
| Volume Solids | 32% | 35% | 39% |
| Thickener System | Cellulosic | Urethane | Urethane |

Paints prepared using Formulation A were tested for wet adhesion on 8 week-old gloss alkyd surface as described in Table 4 below:

**Table 4: Alkyd Adhesion Comparison: Staged vs Unstaged Feed - % Retained**

| Polymer | AAEM Level | Feed | Shelf Aged Paint | Heat Aged Paint (10Days @ 50°C) |
|---|---|---|---|---|
| Comparative B | 8% | Unstaged | 95 | 60 |
| Comparative C | 2% | Unstaged | 0 | 0 |
| Comparative D | 3% | Unstaged | 80 | 0 |
| Comparative E | 4% | Unstaged | 95 | 0 |
| Example 6 | 2% | Staged @ 50% | 30 | 0 |
| Example 7 | 2% | Staged @ 75% | 95 | 10 |
| Example 8 | 4% | Staged @ 50% | 100 | 95 |
| Example 9 | 4% | Staged @ 75% | 100 | 100 |

The data in Table 4 show that when the beta-dicarbonyl monomer feed is staged, an increase in efficiency occurs. That is, for a given level of AAEM in the copolymer, better alkyd adhesion is observed for that polymer where the AAEM monomer is staged versus the polymer where the AAEM monomer is unstaged. Alternatively, for an equal level of desired performance (alkyd adhesion), the invention enables the use of lower levels of AAEM if the addition of the monomer is staged versus if the monomer is unstaged. In addition, the data in Table 2 shows that upon heat aging, the staged polymers are less susceptible to adhesion loss brought about by loss of functionality by hydrolysis.

Paints prepared using Formulation B using the polymers designated in Table 5 were tested for wet adhesion to multiple substrates and for tannin stain blocking. For the latter, a score of 10 is best, and 1 is worst.

**Table 5: Adhesion and Stain Blocking Comparison**

| | Comparative Polymer A | Comparative Polymer B | Example 10 Polymer |
|---|---|---|---|
| | 0% AAEM | 8% AAEM Unstaged | 3% AAEM Staged at 75% of Feed |
| Adhesion to 8 week aged gloss Alkyd | 0% retained | 100% retained | 100% retained |
| Adhesion to Chalky Acrylic | 0% retained | 95% retained | 60% retained |
| Adhesion to Treated Aluminum | 100% retained | 95% retained | 100% retained |
| | 0% AAEM | 8% AAEM Unstaged | 3% AAEM Staged at 75% of Feed |
| Adhesion to Cold Rolled Steel | 20% retained | 100% retained | 100% retained |
| Adhesion to Galvanized Steel | 80% retained | 100% retained | 95% retained |
| Tannin Stain Blocking over Cedar | 7 | 8 | 8 |
| Tannin Stain Blocking Over Redwood | 7 | 6 | 7 |

The data in Table 5 show the improved adhesion of a polymer made with staged beta-dicarbonyl functionality relative to a polymer without this functionality. The data in Table 5 shows the approximate match in adhesion comparing a 3% staged to an 8% unstaged acetoacetoxy functional polymer. In addition, the data shown in Table 5 demonstrates improvements in tannin stain blocking for the polymer of Example 10 relative to the comparative polymers without the beta-dicarbonyl monomer (Comparative PolymerA), or without a bimodal particle size distribution (Comparative Polymer B).

Paints prepared using Formulation C using the polymers designated in Table 4 were tested for wet adhesion to aged alkyd and for dirt pick-up resistance by laboratory test.

**Table 6: Adhesion and Dirt Pick-Up Resistance Comparison**

| | Comparative Polymer A | Example 10 Polymer |
|---|---|---|
| | 0% AAEM | 3% AAEM Staged at 75% of Feed |
| Adhesion to 10 month aged gloss Alkyd | Force to Peel = 610 gms | Force to Peel = 1270 gms |
| Y Reflectance of White Panel | 86.5 | 89.1 |
| Y Reflectance of Panel that was treated with Slurry | 66.1 | 84.5 |

The data in Table 6 show that the polymer of Example 10 has excellent dirt pick-up resistance relative to the comparative polymer without the combination of staged beta-dicarbonyl functionality and photoinitiator.

Paints prepared using Formulation B were exposed to the exterior conditions prevalent in Spring House, Pa. for a period of 13 months. The results are shown below in Table 7.

**Table 7: Dirt Pick-Up Resistance for Paints on Aluminum Panels Subjected to Outdoor Exposure (Horizontal Up, Spring House, Pa) as Measured by Y Reflectance**

| Duration of Exposure (months) | Paint of Comparative Polymer B | Paint of Polymer in Example 10 0 |
|---|---|---|
| 0 | 93 | 93 |
| 4 | 79 | 83 |
| 6 | 75 | 81 |
| 13 | 73 | 79 |

The results in Table 7 show that the dirt pick-up resistance of the paint made from the Polymer in Example 10 exceeds that of the Comparative Example B. The difference in measured Y reflectance plotted in Figure 1 is clearly evident to one simply observing the painted panels with the naked eye. This result shows that the combination of staged beta-dicarbonyl functionality and photoinitiator results in better efficiency of usage of beta-dicarbonyl functionality in providing the improvement in dirt pick-up resistance.

## Claims

1. An aqueous composition comprising:
(A) an aqueous dispersion of a copolymer, in polymerized form, of:
(i) 95-98% by weight of one or more monoethylenically unsaturated monomer; and
(ii) 2-5% by weight of a beta-dicarbonyl monomer or cyanocarbonyl monomer; and
(B) a photoinitiator present in the range of 0.1-1% by weight, based upon the total weight of copolymer,
wherein the said composition is formed by a process whereby at least 75% of the said beta-dicarbonyl monomer or cyanocarbonyl monomer (ii) is added by staged feed of the said monomer during the second half, by weight, of the feed of monomers (i).

2. The composition of claim 1 wherein the said composition is formed by a process whereby all of the said beta-dicarbonyl monomer or cyanocarbonyl monomer (ii) is added by staged feed of the said monomer during the second half, by weight, of the feed of monomers (i).

3. The composition of claim 1 wherein the said composition is formed by a process whereby all of the said beta-dicarbonyl monomer or cyanocarbonyl monomer (ii) is added by staged feed of the said monomer during the last 25%, by weight, of the feed of monomers (i).

4. The composition as claimed in claim 2 wherein the said beta-dicarbonyl monomer or cyanocarbonyl monomer (ii) is chosen from: acetoacetoxy- functional monomers, acetoacetamido- functional monomers, cyanoacetoxy- functional monomers, and cyanoacetamido- functional monomers.

5. The composition as claimed in claim 2 wherein the said beta-dicarbonyl monomer or cyanocarbonyl monomer (ii) is acetoacetoxyethyl methacrylate (AAEM).

6. The composition as claimed in claim 2 wherein the said beta-dicarbonyl monomer or cyanocarbonyl monomer (ii) is present in the enamine form.

7. The composition as claimed in claim 2 wherein the said copolymer has a weight average molecular weight in the range of from 10,000 to 200,000.

8. The composition as claimed in claim 2 wherein the said copolymer has a bimodal particle size distribution wherein the said copolymer comprises a small particle size mode having particles with a median diameter of from 50 to 150 nm; and a larger particle size mode having particles with a median diameter between 150 and 400 nm, and the ratio of small mode particles to larger mode particles is in the range 10:90 to 90: 10 by weight.

9. A method of forming a coating composition comprising:
(A) forming, by polymerization, an aqueous dispersion of a copolymer of:
(i) 95-98% by weight of one or more monoethylenically unsaturated monomer, and
(ii) 2-5% by weight of a beta-dicarbonyl monomer or cyanocarbonyl monomer, whereby all of the said beta-dicarbonyl monomer or cyanocarbonyl monomer (ii) is added by staged feed of the said monomer during the second half, by weight, of the feed of monomers (i); and
(B) adding a photoinitiator to the dispersion in the range of 0.1-1% by weight, based upon the total weight of copolymer; and
wherein the beta-dicarbonyl monomer or cyanocarbonyl monomer (ii) is optionally in the enamine form.

10. A method of producing a coating composition comprising:
(A) forming, by polymerization, an aqueous dispersion of a copolymer of:
(i) 95-98% by weight of one or more monoethylenically unsaturated monomer, and
(ii) 2-5% by weight of a beta-dicarbonyl monomer or cyanocarbonyl monomer, whereby the said beta-dicarbonyl monomer or cyanocarbonyl monomer (ii) is added by staged feed during the second half, by weight, of the feed of monomers (i); and wherein the said copolymer has a bimodal particle size distribution such that the said copolymer comprises a small particle size mode having particles with a median diameter of from 50 to 150 nm; and a larger particle size mode having particles with a median diameter between 150 and 400 nm, and wherein the ratio of small mode particles to larger mode particles is in the range 10:90 to 90: 10 by weight; and
(B) adding a photoinitiator to the dispersion in the range of 0.1-1% by weight, based upon the total weight of copolymer; and
wherein the beta-dicarbonyl monomer or cyanocarbonyl monomer (ii) is optionally in the enamine form.

## Patentansprüche

1. Wässrige Zusammensetzung, umfassend:
(A) eine wässrige Dispersion eines Copolymers, in polymerisierter Form, aus:
(i) 95 bis 98 Gewichtsprozent eines oder mehrerer monoethylenisch ungesättigten/r Monomers/e; und
(ii) 2 bis 5 Gewichtsprozent eines beta-Dicarbonylmonomers oder Cyanocarbonylmonomers; und
(B) einen Photoinitiator, der in dem Bereich von 0,1 bis 1 Gewichtsprozent, bezogen auf das Gesamtgewicht des Copolymers, vorliegt,
wobei die besagte Zusammensetzung durch ein Verfahren gebildet wird, wonach mindestens 75% des besagten beta-Dicarbonylmonomers oder Cyanocarbonylmonomers (ii) in Stufenbeschickung des besagten Monomers während der zweiten Hälfte, bezogen auf das Gewicht, der Beschickung der Monomere (i) hinzugefügt werden.

2. Zusammensetzung nach Anspruch 1, wobei die besagte Zusammensetzung durch ein Verfahren gebildet wird, wonach die Gesamtheit des besagten beta-Dicarbonylmonomers oder Cyanocarbonylmonomers (ii) in Stufenbeschickung des besagten Monomers während der zweiten Hälfte, bezogen auf das Gewicht, der Beschickung der Monomere (i) hinzugefügt wird.

3. Zusammensetzung nach Anspruch 1, wobei die besagte Zusammensetzung durch ein Verfahren gebildet wird, wonach die Gesamtheit des besagten beta-Dicarbonylmonomers oder Cyanocarbonylmonomers (ii) in Stufenbeschickung des besagten Monomers während der letzten 25%, bezogen auf das Gewicht, der Beschickung der Monomere (i) hinzugefügt wird.

4. Zusammensetzung nach Anspruch 2, wobei das besagte beta-Dicarbonylmonomer oder Cyanocarbonylmonomer (ii) aus Acetacetoxy-funktionalen Monomeren, Acetacetamido-funktionalen Monomeren, Cyanoacetoxyfunktionalen Monomeren und Cyanoacetarnido-funktionalen Monomeren ausgewählt ist.

5. Zusammensetzung nach Anspruch 2, wobei das besagte beta-Dicarbonylmonomer oder Cyanocarbonylmonomer (ii) Acetacetoxyethylmethacrylat (AAEM) ist.

6. Zusammensetzung nach Anspruch 2, wobei das besagte beta-Dicarbonylmonomer oder Cyanocarbonylmonomer (ii) in der Enaminform vorliegt.

7. Zusammensetzung nach Anspruch 2, wobei das besagte Copolymer ein Gewichtsmittel des Molekulargewichts in dem Bereich von 10.000 bis 200.000 aufweist.

8. Zusammensetzung nach Anspruch 2, wobei das besagte Copolymer eine bimodale Teilchengrößenverteilung aufweist, wobei das besagte Copolymer einen kleinen Teilchengrößenmodus mit Teilchen, deren Mediandurchmesser von 50 bis 150 nm beträgt, und einen größeren Teilchengrößenmodus mit Teilchen, deren Mediandurchmesser zwischen 150 und 400 nm liegt, umfasst, und das Verhältnis von Teilchen mit kleinem Modus zu Teilchen mit größerem Modus in dem Bereich von 10:90 bis 90:10, bezogen auf das Gewicht, liegt.

9. Verfahren zum Bilden einer Beschichtungszusammensetzung, umfassend:
(A) das Bilden, durch Polymerisation, einer wässrigen Dispersion eines Copolymers aus:
(i) 95 bis 98 Gewichtsprozent eines oder mehrerer monoethylenisch ungesättigten/r Monomers/e, und
(ii) 2 bis 5 Gewichtsprozent eines beta-Dicarbonylmonomers oder Cyanocarbonylmonomers, wonach die Gesamtheit des besagten beta-Dicarbonylmonomers oder Cyanocarbonylmonomers (ii) in Stufenbeschickung des besagten Monomers während der zweiten Hälfte, bezogen auf das Gewicht, der Beschickung der Monomere (i) hinzugefügt wird; und
(B) das Hinzufügen eines Photoinitiators zu der Dispersion in dem Bereich von 0,1 bis 1 Gewichtsprozent, bezogen auf das Gesamtgewicht des Copolymers; und
wobei das beta-Dicarbonylmonomer oder Cyanocarbonylmonomer (ii) gegebenenfalls in der Enaminform vorliegt.

10. Verfahren zum Herstellen einer Beschichtungszusammensetzung, umfassend:
(A) das Bilden, durch Polymerisation, einer wässrigen Dispersion eines Copolymers aus:
(i) 95 bis 98 Gewichtsprozent eines oder mehrerer monoethylenisch ungesättigten/r Monomers/e, und
(ii) 2 bis 5 Gewichtsprozent eines beta-Dicarbonylmonomers oder Cyanocarbonylmonomers, wonach das besagte beta-Dicarbonylmonomer oder Cyanocarbonylmonomer (ii) in Stufenbeschikkung während der zweiten Hälfte, bezogen auf das Gewicht, der Beschickung der Monomere (i) hinzugefügt wird; und wobei das besagte Copolymer eine bimodale Teilchengrößenverteilung aufweist, so dass das besagte Copolymer einen kleinen Teilchengrößenmodus mit Teilchen, deren Mediandurchmesser von 50 bis 150 nm beträgt, und einen größeren Teilchengrößenmodus mit Teilchen, deren Mediandurchmesser zwischen 150 und 400 nm liegt, umfasst, und wobei das Verhältnis von Teilchen mit kleinem Modus zu Teilchen mit größerem Modus in dem Bereich von 10:90 bis 90:10, bezogen auf das Gewicht, liegt; und
(B) das Hinzufügen eines Photoinitiators zu der Dispersion in dem Bereich von 0,1 bis 1 Gewichtsprozent, bezogen auf das Gesamtgewicht des Copolymers; und
wobei das beta-Dicarbonylmonomer oder Cyanocarbonylmonomer (ii) gegebenenfalls in der Enaminform vorliegt.

## Revendications

1. Composition aqueuse comprenant :
(A) une dispersion aqueuse d'un copolymère, dans une forme polymérisée, de :
(i) 95-98 % en poids d'un ou plusieurs monomères monoéthyléniquement insaturés ; et
(ii) 2-5 % en poids d'un monomère de bêta-dicarbonyle ou d'un monomère de cyanocarbonyle ; et
(B) un photoinitiateur présent dans l'intervalle de 0,1-1 % en poids, rapporté au poids total du copolymère,
dans laquelle ladite composition est formée par un procédé par lequel au moins 75 % dudit monomère de bêta-dicarbonyle ou monomère de cyanocarbonyle (II) sont ajoutés par une alimentation en étapes en ledit monomère pendant la seconde moitié, en poids, de l'alimentation en monomères (i).

2. Composition selon la revendication 1, dans laquelle ladite composition est formée par un procédé par lequel la totalité dudit monomère de bêta-dicarbonyle ou monomère de cyanocarbonyle (ii) est ajoutée par une alimentation en étapes en ledit monomère pendant la seconde moitié, en poids, de l'alimentation en monomères (i).

3. Composition selon la revendication 1, dans laquelle ladite composition est formée par un procédé par lequel la totalité dudit monomère de bêta-dicarbonyle ou monomère de cyanocarbonyle (ii) est ajoutée par alimentation en étapes en ledit monomère pendant les derniers 25 %, en poids, de l'alimentation en monomères (i).

4. Composition selon la revendication 2, dans laquelle ledit monomère de bêta-dicarbonyle ou monomère de cyanocarbonyle (ii) est choisi parmi : des monomères acétoacétoxy-fonctionnels, des monomères acétoacétamido-fonctionnels, des monomères cyanoacétoxy-fonctionnels et des monomères cyanoacétamido-fonctionnels.

5. Composition selon la revendication 2, dans laquelle ledit monomère de bêta-dicarbonyle ou monomère de cyanocarbonyle (ii) est le méthacrylate d'acétoacétoxyéthyle (AAEM).

6. Composition selon la revendication 2, dans laquelle ledit monomère de bêta-dicarbonyle ou monomère de cyanocarbonyle (ii) est présent dans la forme d'énamine.

7. Composition selon la revendication 2, dans laquelle ledit copolymère présente un poids moléculaire moyen en poids dans l'intervalle de 10 000 à 200 000.

8. Composition selon la revendication 2, dans laquelle ledit copolymère présente une distribution de taille de particules bimodale dans laquelle ledit copolymère comprend un faible mode de taille de particules présentant des particules avec un diamètre moyen de 50 à 150 nm ; et un mode supérieur de taille de particules présentant des particules avec un diamètre moyen de 150 à 400 nm, et le rapport des particules du faible mode aux particules du mode supérieur se trouve dans l'intervalle de 10 : 90 à 90 : 10 en poids.

9. Procédé de formation d'une composition de revêtement comprenant :
(A) la formation, par polymérisation, d'une dispersion aqueuse d'un copolymère de :
(i) 95-98 % en poids d'un ou plusieurs monomères monoéthyléniquement insaturés, et
(ii) 2-5 % en poids d'un monomère de bêta-dicarbonyle ou monomère de cyanocarbonyle, sur quoi la totalité dudit monomère de bêta-dicarbonyle ou monomère de cyanocarbonyle (ii) est ajoutée par alimentation en étapes en ledit monomère pendant la seconde moitié, en poids, de l'alimentation en monomères (i) ; et
(B) l'addition d'un photoinitiateur à la dispersion dans l'intervalle de 0,1-1 % en poids, rapporté au poids total du copolymère ; et
dans lequel le monomère de bêta-dicarbonyle ou monomère de cyanocarbonyle (ii) est éventuellement dans la forme d'énamine.

10. Procédé de production d'une composition de revêtement comprenant :
(A) la formation, par polymérisation, d'une dispersion aqueuse d'un copolymère de :
(i) 95-98 % en poids d'un ou plusieurs monomères monoéthyléniquement insaturés, et
(ii) 2-5 % en poids d'un monomère de bêta-dicarbonyle ou monomère de cyanocarbonyle, sur quoi ledit monomère de bêta-dicarbonyle ou monomère de cyanocarbonyle (ii) est ajouté par alimentation en étapes pendant la seconde moitié, en poids, de l'alimentation en monomères (i) ; et dans lequel ledit copolymère présente une distribution de taille de particules bimodale de telle sorte que ledit copolymère comprend un faible mode de taille de particules présentant des particules avec un diamètre moyen de 50 à 150 nm ; et un mode supérieur de taille de particules présentant des particules avec un diamètre moyen de 150 à 400 nm, et dans lequel le rapport des particules du faible mode aux particules du mode supérieur se trouve dans l'intervalle de 10 : 90 à 90 : 10 en poids ; et
(B) l'addition d'un photoinitiateur à la dispersion dans l'intervalle de 0,1-1 % en poids, rapporté au poids total du copolymère ; et
dans lequel le monomère de bêta-dicarbonyle ou monomère de cyanocarbonyle (ii) est éventuellement dans la forme d'énamine.
